# EUROPEAN PATENT APPLICATION

(11) **EP 4 708 466 A1**
(43) Date of publication of application: **11.03.2026**
(21) Application number: 25198914.1
(22) Date of filing: 29.08.2025
(51) Int. Cl.: H01M 10/658, H01M 50/105, H01M 50/143, H01M 50/202, H01M 50/627

(54) **PRISMATIC TYPE SECONDARY BATTERY AND MANUFACTURING METHOD THEREOF**

(30) Priority: 04.09.2024 KR 20240119649; 14.04.2025 KR 20250047893
(71) Applicant: LG Electronics Inc., Yeongdeungpo-gu Seoul 07336 (KR)
(72) Inventor: SEONG, Daeyong, 07796 Seoul (KR); KWON, Jaewook, 07796 Seoul (KR); CHO, Hojae, 07796 Seoul (KR); LEE, Heejong, 07796 Seoul (KR); CHO, Hyunbae, 07796 Seoul (KR)
(74) Representative: Schornack, Oliver

(57) **Abstract**

A prismatic type secondary battery includes an electrode assembly including an electrode tab, a pouch that accommodates the electrode assembly and includes a joint portion formed open at a location corresponding to the electrode tab, a prismatic can having one side open to accommodate the pouch, and a cap assembly including a metal current collector and inserted into the open side of the prismatic can, and in this case, the pouch includes the joint portion joined to the cap assembly while the electrode tab is connected to the metal current collector, and the prismatic type secondary battery improves the efficiency of an electrolyte injection process through a sealing structure in which a pouch accommodating an electrode assembly is inserted into a prismatic can and a joint portion of the pouch is joined to a cap assembly.

## Description

### TECHNICAL FIELD

The present disclosure relates to a prismatic type secondary battery and a manufacturing method thereof, which improve the efficiency of an electrolyte injection process through a sealing structure in which a pouch accommodating an electrode assembly is inserted into a prismatic can and a joint portion of the pouch is joined to a cap assembly.

### BACKGROUND

In general, a secondary battery is a battery that converts external electrical energy into chemical energy, stores the energy, and generates electricity when needed, and commonly used secondary batteries include lead-acid batteries, nickel-cadmium (Ni-Cd) batteries, nickel-metal hydride (NiMH) batteries, lithium-ion batteries (Li-ion), and lithium-ion polymer batteries (Li-ion polymer).

The secondary battery is manufactured by applying an active material to a surface of an electrode collector to form a positive electrode and a negative electrode, interposing a separator therebetween to form an electrode assembly, and then mounting the electrode assembly inside a cylindrical or prismatic metal can or a pouch-shaped case made of aluminum laminate sheet, and mainly by injecting or impregnating a liquid electrolyte into the electrode assembly or using a solid electrolyte.

Therefore, the secondary battery is charged and discharged by allowing ions of the electrolyte injected between the positive and negative electrodes, which are insulated by a separator, to move between the positive and negative electrodes.

The electrodes used in the positive and negative electrodes of the secondary battery include an electrode body constituting the electrode and an electrode active material applied on the electrode body.

The electrode body may generally be processed into a sheet, thin plate, or foil form by using a metal with excellent conductivity, such as aluminum (Al) or copper (Cu).

An electrode film for forming an electrode assembly is manufactured in a form in which an active material is applied to a portion of the film and the electrode body is exposed in the remaining portion.

The exposed portion of the electrode body is processed to function as an electrode terminal for connecting the positive and negative electrodes to the outside when forming an electrode assembly (anode, cathode, and separator).

Secondary batteries may be classified into cylindrical, prismatic, and pouched types depending on their shape.

Here, the pouch type secondary battery has an advantage of having a relatively free shape by accommodating the electrode assembly described above in a flexible pouch, having a relatively easy manufacturing process, and having low manufacturing costs. In particular, the pouch type secondary battery is formed by injecting electrolyte into one surface of a pouch, and has higher efficiency of the electrolyte injection process than that of other types of secondary batteries.

However, the pouch type secondary battery has a pouch with no rigidity and has no vent structure to prevent explosion or fire when internal pressure abnormally increases due to an abnormal condition of the secondary battery, and thus there are concerns about stability compared to other types of secondary batteries.

In contrast, the prismatic type secondary battery has an advantage of stability due to the rigidity of the prismatic can that accommodates the electrode assembly and the vent structure described above. However, the prismatic type secondary battery is formed by injecting an electrolyte into the inside of the prismatic can through a hole, and thus the efficiency of the electrolyte injection process in the prismatic type secondary battery is low, which corresponds to a Neck process. Therefore, the prismatic type secondary battery has a disadvantage of lower productivity than the pouch type secondary battery.

Therefore, there is a need to improve the productivity of secondary batteries by increasing the efficiency of the electrolyte injection process and ensure structural stability.

### SUMMARY

The present disclosure provides a prismatic type secondary battery and a manufacturing method thereof, and more particularly, the present disclosure provides a prismatic type secondary battery and a manufacturing method thereof, which improve the efficiency of an electrolyte injection process through a sealing structure in which a pouch accommodating an electrode assembly is inserted into a prismatic can and a joint portion of the pouch is joined to a cap assembly.

The present disclosure provides a pouch type secondary battery and a manufacturing method thereof, which may ensure stability by double-sealing an electrode assembly with a pouch and a prismatic can with rigidity and interposing a fire extinguishing fluid between the pouch and the prismatic can.

The present disclosure provides a pouch type secondary battery and a manufacturing method thereof, which may utilize a production line of a pouch type secondary battery according to the related art to manufacture a pouch type secondary battery while reducing investment costs.

The objects to be achieved by the present disclosure are not limited to the technical objects described above and other objects that are not stated herein will be clearly understood by those skilled in the art from the following specifications.

According to an embodiment of the present disclosure, a prismatic type secondary battery includes an electrode assembly including an electrode tab, a pouch that accommodates the electrode assembly and includes a joint portion formed open at a location corresponding to the electrode tab, a prismatic can having one side open to accommodate the pouch, and a cap assembly including a metal current collector and inserted into the open side of the prismatic can, wherein the pouch includes the joint portion joined to the cap assembly while the electrode tab is connected to the metal current collector.

The prismatic type secondary battery may further include a fire extinguishing fluid interposed between the pouch and the prismatic can.

The electrode tab may be bent with one end fused and connected to the metal current collector.

The end of the electrode tab may be bent vertically.

The prismatic can may include a metal material, and the cap assembly may include a cap plate coupled to an inner surface of the open side of the prismatic can.

The cap assembly may include a connection terminal coupled to the cap plate and electrically connected to the metal current collector.

The cap assembly may include an insulating plate coupled between the metal current collector and the cap plate.

The joint portion may be fused and joined to an outer surface of the insulating plate.

The cap plate may include a bent portion formed on one surface.

The bent portion may include a vent hole formed in the cap plate, and a bent located in the bent hole.

The cap plate includes a metal material and is joined by welding to an inner surface of the open side of the prismatic can.

According to an embodiment of the present disclosure, a method of manufacturing a prismatic type secondary battery includes connecting an electrode tab of an electrode assembly accommodated in a pouch to a metal current collector of a cap assembly, bending the electrode tab while connected to the metal current collector, joining an opened joint portion of the pouch to the cap assembly, injecting an electrolyte into the pouch and sealing and processing the pouch, and inserting the pouch and the cap assembly into a prismatic can with one side open.

The method may further include injecting a fire extinguishing fluid between the pouch and the prismatic can.

The electrode tab may be bent with one end fused and connected to the metal current collector.

The end of the electrode tab may be bent vertically.

### BRIEF DESCRIPTION OF THE DRAWINGS

The present disclosure will become more fully understood from the detailed description given herein below and the accompanying drawings, which are given by illustration only, and thus are not limitative of the present disclosure.
FIG. 1 is a diagram illustrating a pouch type secondary battery according to embodiments.
FIGS. 2 and 3 are diagrams illustrating a prismatic type secondary battery into which a pouch type secondary battery is inserted according to embodiments.
FIG. 4 is a diagram illustrating a cap assembly in a prismatic type secondary battery according to embodiments.
FIG. 5 is an exploded view illustrating a cap assembly in a prismatic type secondary battery according to embodiments.
FIG. 6 is a diagram for explaining a method of manufacturing a prismatic type secondary battery according to embodiments.
FIG. 7 is a diagram illustrating a prismatic type secondary battery according to embodiments.
FIGS. 8 to 12 are diagrams illustrating a process for manufacturing a prismatic type secondary battery according to embodiments.
FIG. 13 is a diagram for explaining a method of manufacturing a prismatic type secondary battery according to embodiments.
FIG. 14 is a diagram illustrating a pouch type secondary battery according to embodiments.
FIG. 15 is a diagram illustrating a cap assembly in a pouch type secondary battery according to embodiments.
FIG. 16 is an exploded view of a cap assembly in a pouch type secondary battery according to embodiments.
FIGS. 17 to 20 are diagrams illustrating a process for manufacturing a pouch type secondary battery according to embodiments.
FIG. 21 is a diagram illustrating a battery pack including a pouch type secondary battery according to embodiments.

### DETAILED DESCRIPTION

Description will now be given in detail according to exemplary embodiments disclosed herein, with reference to the accompanying drawings. The same or equivalent components may be provided with the same reference numbers, and description thereof will not be repeated. As used herein, the suffixes "module" and "part" are added or used interchangeably to facilitate preparation of this specification and are not intended to suggest distinct meanings or functions. In describing embodiments disclosed in this specification, relevant well-known technologies may not be described in detail in order not to obscure the subject matter of the embodiments disclosed in this specification. In addition, it should be noted that the accompanying drawings are only for easy understanding of the embodiments disclosed in the present specification, and should not be construed as limiting the technical spirit disclosed in the present specification. As such, the present disclosure should be construed to extend to any alterations, equivalents and substitutes in addition to those which are particularly set out in the accompanying drawings.

Although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, it will be understood that when an element is referred to as being "directly connected with" another element, there are no intervening elements present.

A singular representation may include a plural representation unless it represents a definitely different meaning from the context.

The terms such as "include" or "have" used herein are intended to indicate that features, numbers, steps, operations, elements, components, or combinations thereof used in the following description exist and it should be thus understood that the possibility of existence or addition of one or more different features, numbers, steps, operations, elements, components, or combinations thereof is not excluded.

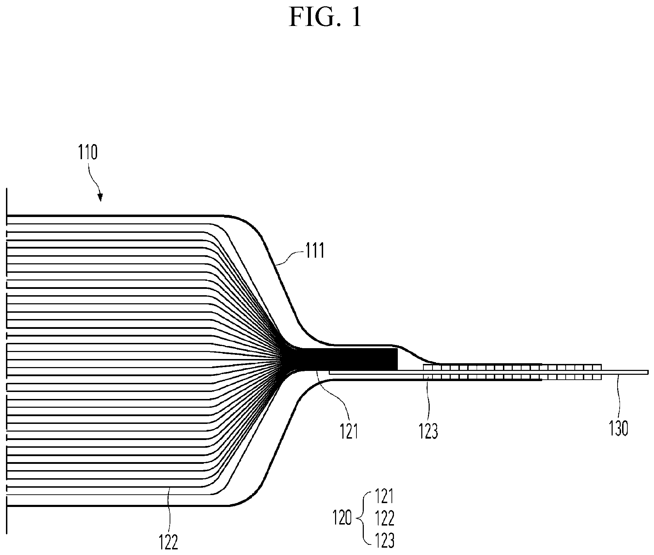

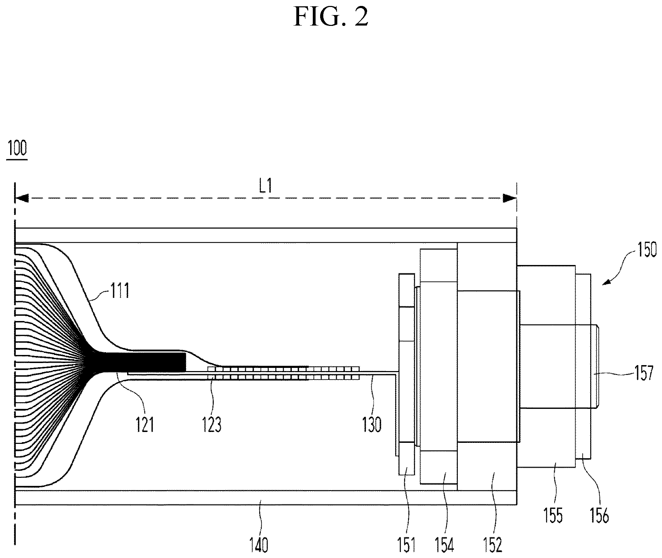

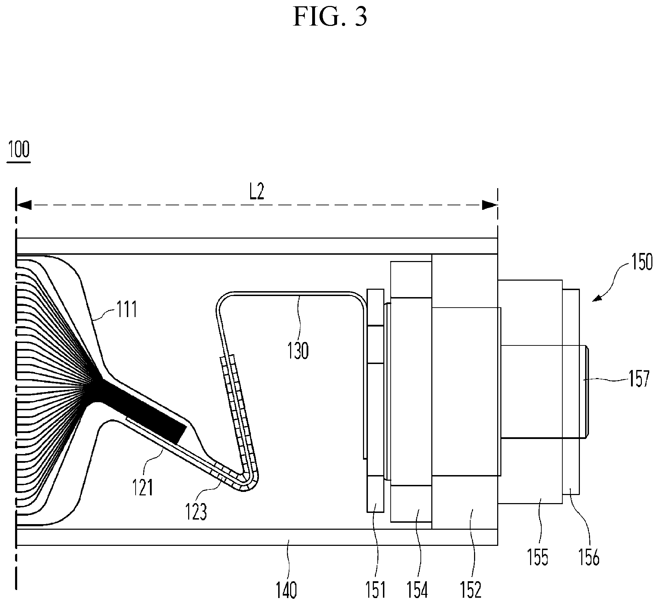

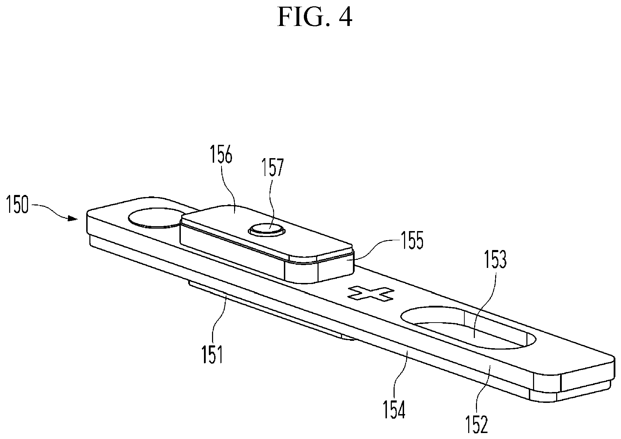

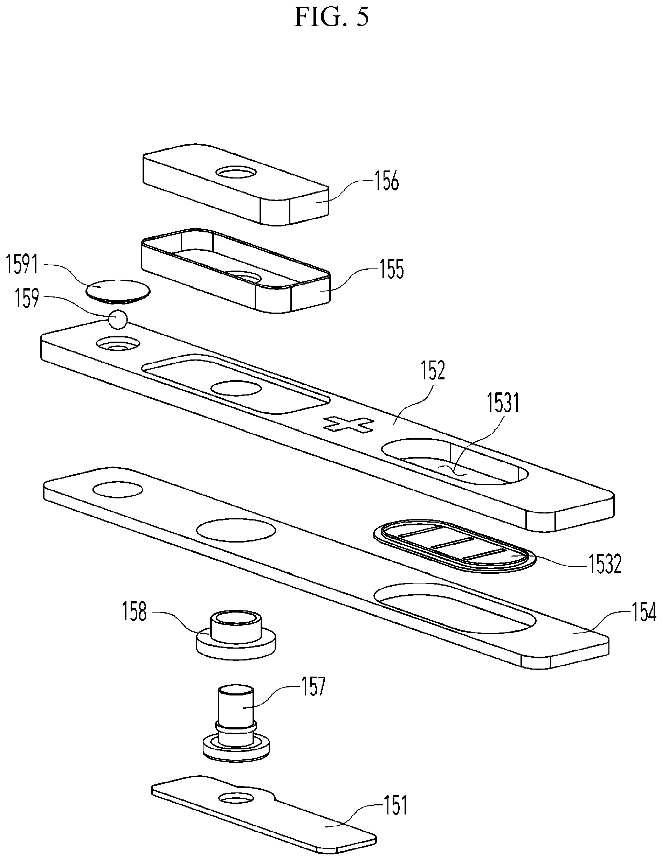

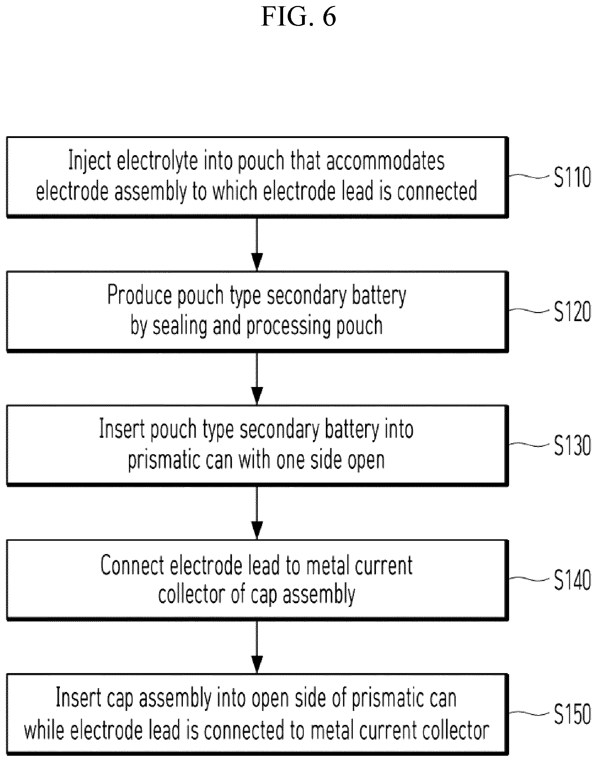

FIG. 1 is a diagram illustrating a pouch type secondary battery 110 according to embodiments. FIGS. 2 and 3 are diagrams illustrating a prismatic type secondary battery 100 into which the pouch type secondary battery 110 is inserted according to embodiments. FIG. 4 is a diagram illustrating a cap assembly 150 in the prismatic type secondary battery 100 according to embodiments. FIG. 5 is an exploded view illustrating the cap assembly 150 in the prismatic type secondary battery 100 according to embodiments. FIG. 6 is a diagram for explaining a method of manufacturing the prismatic type secondary battery 100 according to embodiments.

Referring to FIG. 1, the pouch type secondary battery 110 may be manufactured through a process of forming an electrode assembly 120 by interposing a separator between electrodes, then accommodating the electrode assembly 120 in a pouch 111, and injecting an electrolyte into the inside of the pouch 111 as described above.

The electrode assembly 120 includes an electrode tab 121 connected to an electrode 122, and an electrode lead 130 may be connected to the electrode tab 121. The pouch 111 may accommodate the electrode assembly 120 and a portion of the electrode lead 130. That is, one end of the electrode lead 130 protrudes outside the pouch 111. The electrode assembly 120 may include an electrode film 123 interposed between the pouch 111 and the electrode lead 130.

As described above, the pouch type secondary battery 110 has an advantage of having a relatively free shape by accommodating the electrode assembly 120 in a flexible pouch 111, having a relatively easy manufacturing process, and low manufacturing cost. In particular, the pouch type secondary battery 110 is formed by injecting electrolyte into one surface of the pouch 111, and has higher efficiency of the electrolyte injection process than that of other types of secondary batteries.

However, the pouch type secondary battery 110 has the pouch 111 with no rigidity and has no vent structure to prevent explosion or fire when internal pressure abnormally increases due to an abnormal condition of the secondary battery, and thus there are concerns about stability compared to other types of secondary batteries.

Referring to FIG. 2 together, the prismatic type secondary battery 100 according to an embodiment of the present disclosure may include the pouch type secondary battery 110 described above, a prismatic can 140 that has one side open to accommodate the pouch type secondary battery 110, and the cap assembly 150 inserted into the open side of the prismatic can 140. Here, the cap assembly 150 may include a metal current collector 151. The electrode lead 130 may be bent while connected to the metal current collector 151 when the cap assembly 150 is inserted.

That is, the prismatic type secondary battery 100 according to an embodiment of the present disclosure may have a structure in which the pouch type secondary battery 110 is inserted into the prismatic can 140 having rigidity, and thus may resolve the stability problem, which is a disadvantage of the pouch type secondary battery 110 described above.

A prismatic type secondary battery according to the related art is formed by injecting an electrolyte into the inside through a hole, and thus the efficiency of the electrolyte injection process is low, which corresponds to a neck process, and there is a disadvantage of low productivity compared to the pouch type secondary battery 110.

Therefore, the prismatic type secondary battery 100 according to an embodiment of the present disclosure may resolve the problem described above by inserting the pouch type secondary battery 110 having high efficiency of the electrolyte injection process into the prismatic can 140, thereby improving the productivity of the prismatic type secondary battery 100 according to the present disclosure.

The prismatic type secondary battery 100 according to an embodiment of the present disclosure may utilize a production line of the pouch type secondary battery 110 according to the related art, and thus there is an effect of manufacturing the prismatic type secondary battery 100 while reducing investment costs.

As shown in FIG. 2, one end of the electrode lead 130 protruding outside the pouch 111 may be fused and connected to the metal current collector 151. In this case, one end of the electrode lead 130 may be bent vertically.

This is to manufacture the prismatic type secondary battery 100 according to an embodiment of the present disclosure by fusing and connecting the metal current collector 151 of the cap assembly 150 to one end of the electrode lead 130 as shown in FIG. 1, and then bending the electrode lead 130 such that the electrode lead 130 is bent vertically.

The prismatic type secondary battery 100 according to an embodiment of the present disclosure may be manufactured by inserting the pouch type secondary battery 110 and the cap assembly 150 into an open side of the prismatic can 140, as shown in FIG. 2.

The prismatic type secondary battery 100 according to an embodiment of the present disclosure may be manufactured by reducing the length of the prismatic can 140 by utilizing the advantage of the pouch type secondary battery 110 having flexibility. In this case, as shown in FIG. 1 and FIG. 3, the electrode tab 121 of the pouch type secondary battery 110 and a portion of the pouch 111 that accommodates the electrode tab 121 may be bent together with the electrode lead 130.

As such, a length L2 of the prismatic can 140 illustrated in FIG. 3 may be reduced compared to a length L1 of the prismatic can 140 illustrated in FIG. 2, and thus there is a structural advantage in miniaturizing a battery pack or increasing a capacity of the battery pack when the battery pack is manufactured by arranging a plurality of prismatic type secondary batteries 100 according to the present disclosure.

In this case, as illustrated in FIGS. 2 and 3, the prismatic type secondary battery 100 according to an embodiment of the present disclosure may be formed such that the electrode lead 130 of the pouch type secondary battery 110 has a length that varies when the electrode lead 130 is processed, and as such, even if the length of the prismatic can 140 is reduced, the electrode lead 130 and the metal current collector 151 may be stably connected.

In the prismatic type secondary battery 100 according to an embodiment of the present disclosure, the prismatic can 140 may include a metal material to ensure rigidity. The cap assembly 150 may include a cap plate 152 coupled to an inner surface of an open side of the prismatic can 140.

Here, the cap plate 152 may include a metal material, and the cap plate 152 made of a metal material may be welded to the prismatic can 140 made of a metal material to join the cap plate 152 to the inner surface of one open side of the prismatic can 140. As such, the open side of the prismatic can 140 may be sealed.

In the prismatic type secondary battery 100 according to an embodiment of the present disclosure, the pouch 111 may include plastic. A typical pouch performs a function of protecting the electrode assembly 120 and forms an outer appearance, and thus is configured in a form in which a metal film is interposed to ensure heat dissipation and rigidity.

However, in the prismatic type secondary battery 100 according to an embodiment of the present disclosure, the pouch type secondary battery 110 is inserted into the prismatic can 140 having rigidity, and thus the pouch 111 does not constitute the outer appearance. Accordingly, in the prismatic type secondary battery 100 according to an embodiment of the present disclosure, the pouch 111 may be manufactured from an inexpensive plastic from which the metal film described above is removed, thereby enabling reduction in material costs.

Referring to FIGS. 4 and 5 together, in the prismatic type secondary battery 100 according to an embodiment of the present disclosure, the cap plate 152 of the cap assembly 150 may include a vent portion 153 formed on one surface. As described above, the pouch type secondary battery 110 has no vent structure and thus has a disadvantage in terms of stability. Therefore, the prismatic type secondary battery 100 according to the present disclosure may ensure stability through the vent portion 153 while utilizing the advantages of the pouch type secondary battery 110.

Here, the vent portion 153 may include a vent hole 1531 formed in the cap plate 152 and a vent 1532 located in the vent hole 1531. In an abnormal state, such as when the internal pressure of the prismatic type secondary battery 100 increases due to gas generation through the vent portion 153, the vent 1532 ruptures or breaks, releasing gas inside the prismatic can 140 to the outside, thereby preventing an explosion or fire.

In the prismatic type secondary battery 100 according to an embodiment of the present disclosure, the cap assembly 150 may include an insulating plate 154 coupled between the metal current collector 151 and the cap plate 152. As described above, the cap plate 152 may include a metal material to be joined to the prismatic can 140 through welding, and thus the insulating plate 154 may be located between the metal current collector 151 and the cap plate 152.

For a function of the vent portion 153 formed in the cap plate 152 described above, a hole may be formed in the insulating plate 154 at a location corresponding to the vent portion 153, as shown in FIG. 5.

In the prismatic type secondary battery 100 according to an embodiment of the present disclosure, the cap assembly 150 may include a connection terminal 156 that is electrically connected to the outside. An insulating bracket 155 to which the connection terminal 156 is coupled may be coupled to the cap plate 152.

The cap assembly 150 may include a rivet terminal 157 for electrically connecting the metal current collector 151 connected to the electrode lead 130 to the connection terminal 156. A gasket 158 coupled to the rivet terminal 157 may be interposed between the metal current collector 151 and the cap plate 152. The cap assembly 150 may include a seal ball 159 and a cover 1591 that are located at a location corresponding to an inlet for injecting an electrolyte.

Here, in the case of the prismatic type secondary battery 100 according to an embodiment of the present disclosure, the electrolyte is injected into the pouch type secondary battery 110, and thus there is an advantage in that a separate inlet for injecting the electrolyte may be omitted. Accordingly, the seal ball 159 and cover 1591 described above may be omitted.

FIG. 6 is a diagram for explaining a method of manufacturing the prismatic type secondary battery 100 according to an embodiment of the present disclosure. Hereinafter, the above contents are comprehensively explained through FIGS. 1 to 5.

First, an electrolyte may be injected into the pouch 111 that accommodates the electrode assembly 120 to which the electrode lead 130 is connected (S110). The pouch type secondary battery 110 may be produced by sealing and processing the pouch 111 (S120). Then, the pouch type secondary battery 110 may be inserted into the prismatic can 140 with one side open (S130), and the electrode lead 130 may be connected to the metal current collector 151 of the cap assembly 150 (S140).

The method of manufacturing the prismatic type secondary battery 100 according to the present disclosure may include connecting the electrode lead 130 to the metal current collector 151 of the cap assembly 150 (S140), and then inserting the pouch type secondary battery 110 into the prismatic can 140 with one side open (S130).

In a state in which the electrode lead 130 is connected to the metal current collector 151, the cap assembly 150 may be inserted into the open side of the prismatic can 140 (S150). Then, the cap plate 152 of the cap assembly 150 and the prismatic can 140 may be welded to seal the open side of the prismatic can 140.

Accordingly, the electrode lead 130 may be bent as described above, and the prismatic type secondary battery 100 according to the present disclosure having a structure in which the pouch type secondary battery 110 is inserted into the prismatic can 140 may be manufactured.

In summary, the prismatic type secondary battery 100 and manufacturing method thereof according to the present disclosure may improve the efficiency of the electrolyte injection process through a structure in which the pouch type secondary battery 110 is inserted into the prismatic can 140. The production line of the pouch type secondary battery 110 according to the related art may be used, and thus the prismatic type secondary battery 100 may be manufactured while reducing investment costs. The pouch 111 may be made of an inexpensive material compared to the pouch type secondary battery 110 according to the related art, and thus material costs may be reduced. An explosion or fire may be prevented when the internal pressure abnormally increases through the vent portion 153 of the cap assembly 150.

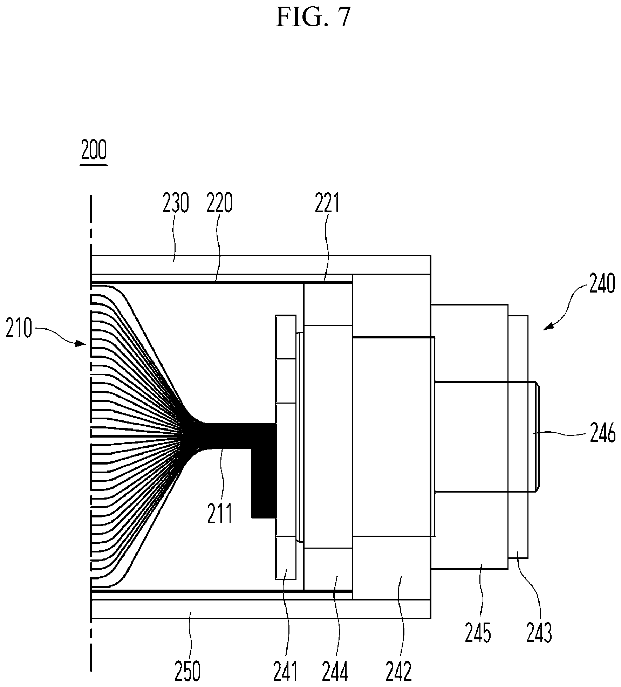

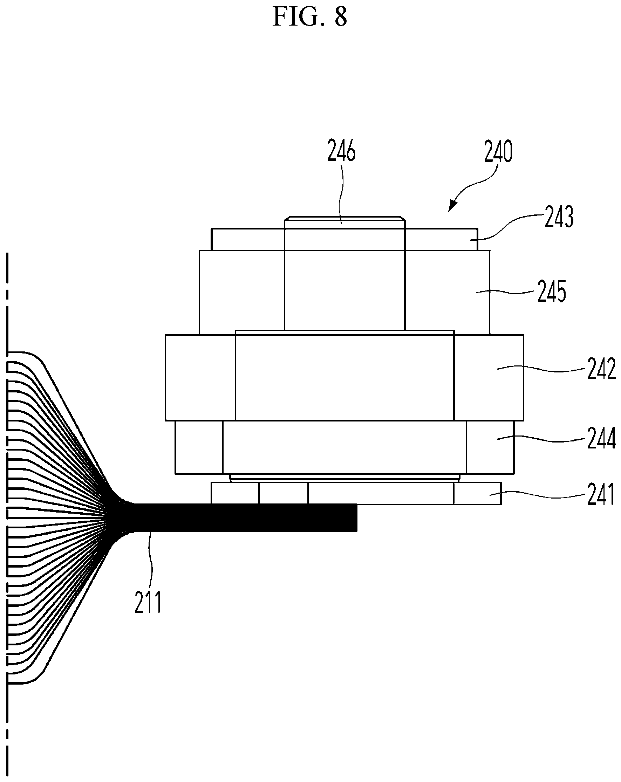

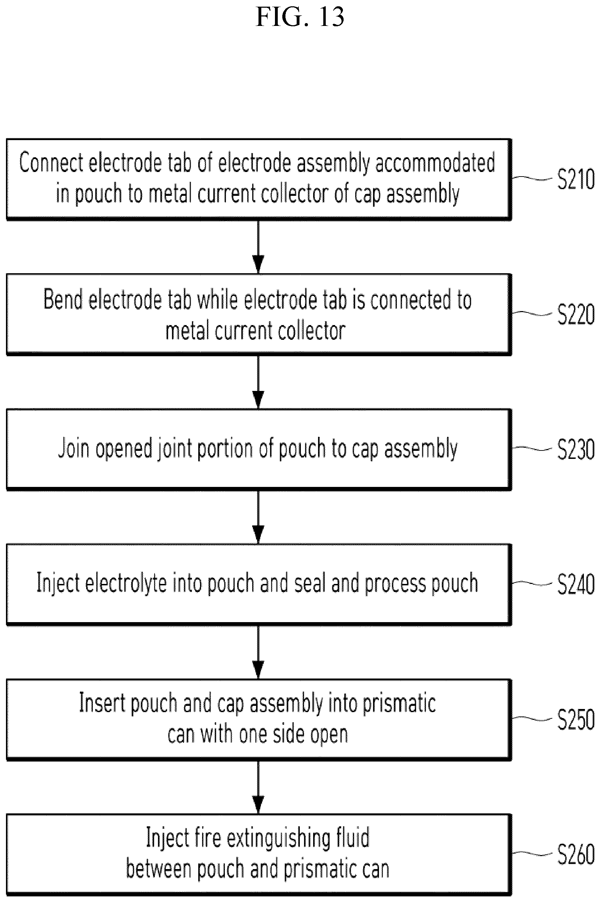

FIG. 7 is a diagram illustrating a prismatic type secondary battery 200 according to embodiments. FIGS. 8 to 12 are diagrams illustrating a process for manufacturing a prismatic type secondary battery 200 according to embodiments. FIG. 13 is a diagram for explaining a method of manufacturing the prismatic type secondary battery 200 according to embodiments.

As illustrated in FIG. 7, the prismatic type secondary battery 200 according to an embodiment of the present disclosure may include an electrode assembly 210, a pouch 220, a prismatic can 230, and a cap assembly 240. The electrode assembly 210 may include an electrode tab 211, and the pouch 220 may accommodate the electrode assembly 210. The pouch 220 may include a joint portion 221 formed by being open at a location corresponding to the electrode tab 211.

The prismatic can 230 may have one side open to accommodate the pouch 220. The cap assembly 240 may include a metal current collector 241 and may be inserted into an open side of the prismatic can 230. In particular, in the prismatic type secondary battery 200 according to an embodiment of the present disclosure, the pouch 220 may have the joint portion 221 joined to the cap assembly 240 while the electrode tab 211 is connected to the metal current collector 241.

Therefore, the prismatic type secondary battery 200 according to an embodiment of the present disclosure may resolve the stability problem, which is a disadvantage of the pouch type secondary battery 110 described above, through a structure in which the electrode assembly 210 is double-sealed with the pouch 220 and the prismatic can 230 having rigidity.

Unlike the prismatic type secondary battery 100 having a structure in which the pouch type secondary battery 110 described above through FIGS. 1 to 6 is inserted, this may be implemented through a structure in which the electrode lead 130 is omitted from the pouch type secondary battery 110 and the joint portion 221 of the pouch 220 is joined to the cap assembly 240.

The prismatic can 230 and cap assembly 240 illustrated in FIG. 7 may correspond to the configuration of the prismatic can 140 and cap assembly 150 described above with reference to FIGS. 1 to 6. Accordingly, the prismatic type secondary battery 200 according to an embodiment of the present disclosure may be manufactured to have various structures while utilizing the production line of the pouch type secondary battery 110 according to the related art, thereby having an effect of reducing investment costs.

The prismatic type secondary battery 200 according to an embodiment of the present disclosure may include a fire extinguishing fluid 250 interposed between the pouch 220 and the prismatic can 230. The fire extinguishing fluid 250 may be, for example, a coolant, which enables easier response to fire or explosion, thereby ensuring stability. This may be implemented through a structure of the prismatic type secondary battery 200 according to the present disclosure, which double seals the electrode assembly 210 with the pouch 220 and the prismatic can 230 with rigidity as described above.

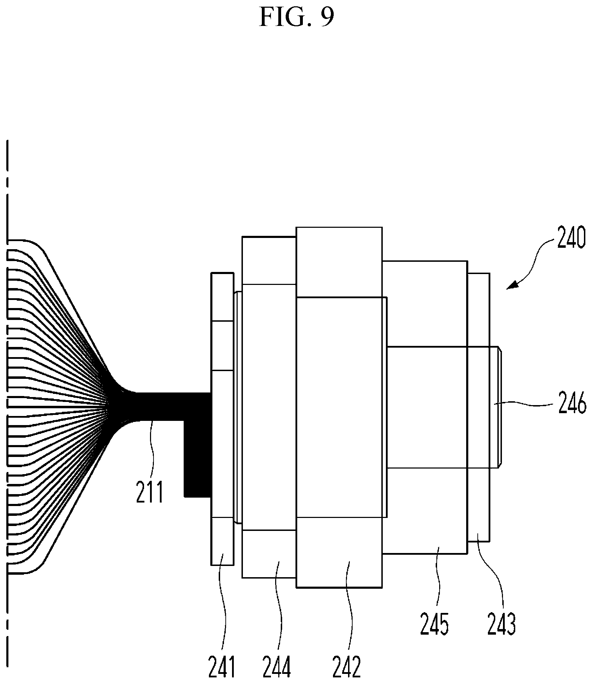

FIG. 8 is a diagram illustrating a shape in which one end of the electrode tab 211 is is connected to the metal current collector 241 by fusing in the prismatic type secondary battery 200 according to an embodiment of the present disclosure. As shown in FIG. 9, one end of the electrode tab 211 may be bent. In this case, one end of the electrode tab 211 may be bent vertically.

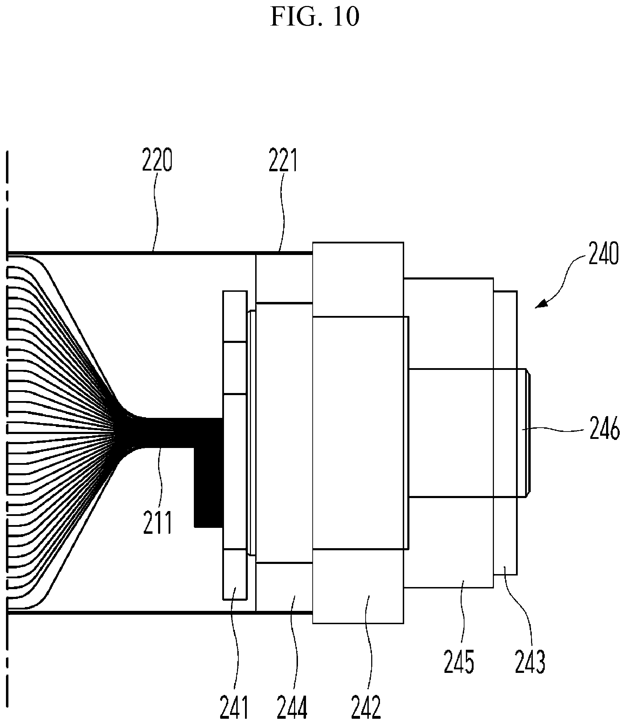

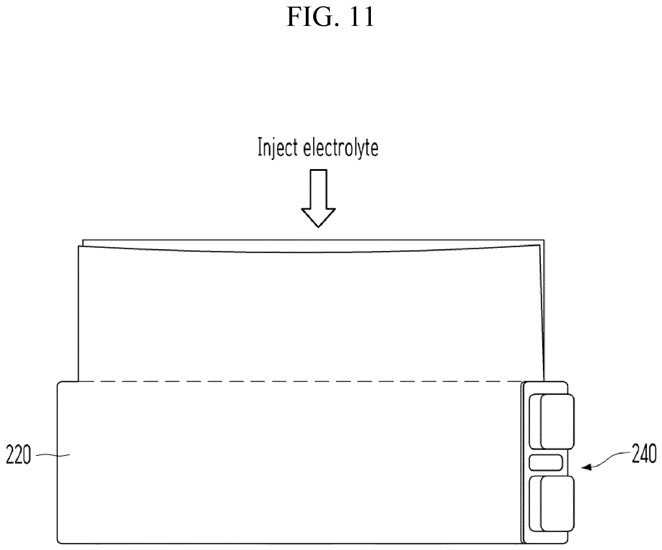

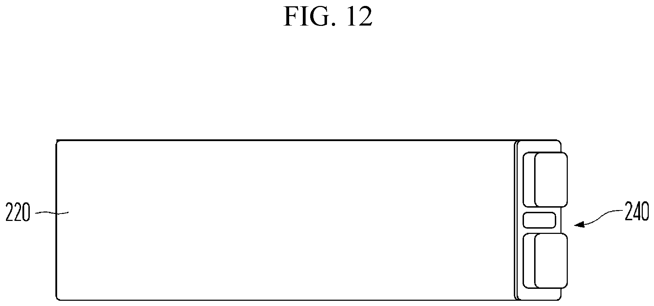

Then, as shown in FIG. 10, the joint portion 221 of the pouch 220 may be joined to the cap assembly 240 to seal the electrode assembly 210 with the pouch 220 and the cap assembly 240. As shown in FIG. 11 and FIG. 12, an electrolyte may be injected into one surface of the pouch 220 and the pouch 220 may be sealed and processed. Then, the prismatic type secondary battery 200 according to an embodiment of the present disclosure may be produced by inserting the pouch 220 into the prismatic can 230 as shown in FIG. 7.

Here, in the prismatic type secondary battery 200 according to an embodiment of the present disclosure, the prismatic can 230 may include a metal material to ensure rigidity. The cap assembly 240 may include a cap plate 242 coupled to an inner surface of an open side of the prismatic can 230.

Here, the cap plate 252 may include a metal material, and the cap plate 242 made of a metal material may be welded to the prismatic can 230 made of a metal material to join the cap plate 242 to the inner surface of one open side of the prismatic can 230. As such, the open side of the prismatic can 230 may be sealed.

In the prismatic type secondary battery 200 according to an embodiment of the present disclosure, the cap assembly 240 may include an insulating plate 244 coupled between the metal current collector 241 and the cap plate 242. As described above, the cap plate 242 may include a metal material to be joined to the prismatic can 230 through welding, and thus the insulating plate 244 may be located between the metal current collector 241 and the cap plate 242.

Here, the joint portion 221 of the pouch 220 may be fused and joined to an outer surface of the insulating plate 244. That is, the joint portion 221 of the pouch 220 is fused and joined to the outer surface of the insulating plate 244, and the cap plate 242 is welded and joined to the inner surface of the open side of the prismatic can 230, and thus the prismatic type secondary battery 200 according to an embodiment of the present disclosure implement the double sealing structure described above.

As described above, in the prismatic type secondary battery 200 according to an embodiment of the present disclosure, the cap assembly 240 may correspond to the configuration of the c ap assembly 150 illustrated in FIGS. 4 and 5. That is, in the prismatic type secondary battery 200 according to an embodiment of the present disclosure, the cap plate 242 of the cap assembly 240 may include the vent portion 153 formed on one surface.

As described above, the pouch type secondary battery 110 has no vent structure and thus has a disadvantage in terms of stability. Therefore, the prismatic type secondary battery 200 according to the present disclosure may ensure stability through the vent portion 153 while utilizing the advantages of the pouch type secondary battery 110.

Here, the vent portion 153 may include the vent hole 1531 formed in the cap plate 242 and the vent 1532 located in the vent hole 1531. In an abnormal state, such as when the internal pressure of the prismatic type secondary battery 200 increases due to gas generation through the vent portion 153, the vent 1532 ruptures or breaks, releasing gas inside the prismatic can 230 to the outside, thereby preventing an explosion or fire.

In the prismatic type secondary battery 200 according to an embodiment of the present disclosure, the cap assembly 240 may include a connection terminal 243 that is electrically connected to the outside. An insulating bracket to which the connection terminal 243 is coupled may be coupled to the cap plate 242. The cap assembly 240 may include a rivet terminal 246 for electrically connecting the metal current collector 241 connected to an electrode lead to the connection terminal 243.

Here, in the case of the prismatic type secondary battery 200 according to an embodiment of the present disclosure, the electrolyte is injected into the pouch 220, and thus there is an advantage in that a separate inlet for injecting the electrolyte may be omitted.

FIG. 13 is a diagram for explaining a method of manufacturing the prismatic type secondary battery 200 according to an embodiment of the present disclosure. Hereinafter, the above contents are comprehensively explained through FIGS. 7 to 12.

First, the electrode tab 211 of the electrode assembly 210 accommodated in the pouch 220 may be connected to the metal current collector 241 of the cap assembly 240 (S210). The electrode tab 211 may be bent while connected to the metal current collector 241 (S220). Then, the opened joint portion 221 of the pouch 220 may be joined to the cap assembly 240 (S230).

As shown in FIG. 11 and FIG. 12, an electrolyte may be injected into one surface of the pouch 220 and the pouch 220 may be sealed and processed (S240). Then, the pouch 220 and the cap assembly 240 may be inserted into the prismatic can 230 with one side open (S250). The cap plate 242 of the cap assembly 240 and the prismatic can 230 may be welded to seal the open side of the prismatic can 230.

Accordingly, it is possible to produce the prismatic type secondary battery 200 according to the present disclosure having a structure in which the electrode assembly 210 is double-sealed with the pouch 220 and the prismatic can 230 having rigidity.

In the method of manufacturing the prismatic type secondary battery 200 according to an embodiment of the present disclosure, the fire extinguishing fluid 250 may be injected between the pouch 220 and the prismatic can 230 through the double sealing structure described above (S260), thereby making it easier to respond to fire or explosion and ensuring stability.

In summary, the prismatic type secondary battery 200 and manufacturing method thereof according to the present disclosure may improve the efficiency of the electrolyte injection process through a sealing structure in which the pouch 220 that accommodates the electrode assembly 210 is inserted into the prismatic can 230 and the joint portion 221 of the pouch 220 is joined to the cap assembly 240. The electrode assembly 210 may be double-sealed with the pouch 220 and the prismatic can 230 with rigidity, and the fire extinguishing fluid 250 may be interposed between the pouch 220 and the rigid can to ensure stability. The production line of the pouch type secondary battery according to the related art may be used, and thus the prismatic type secondary battery 200 may be manufactured while reducing investment costs.

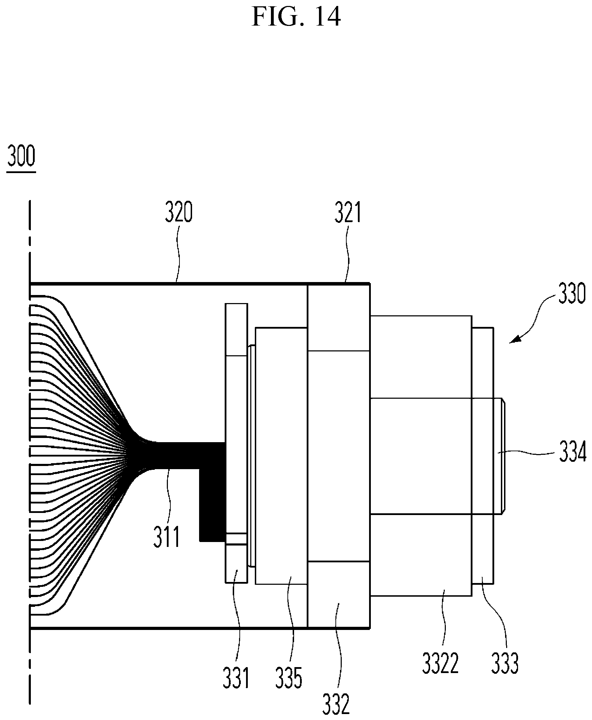

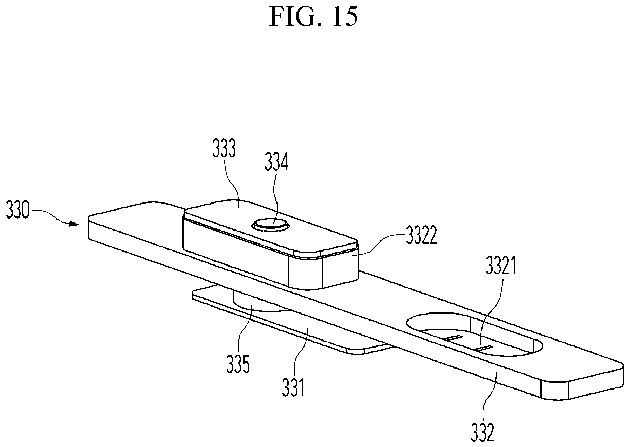

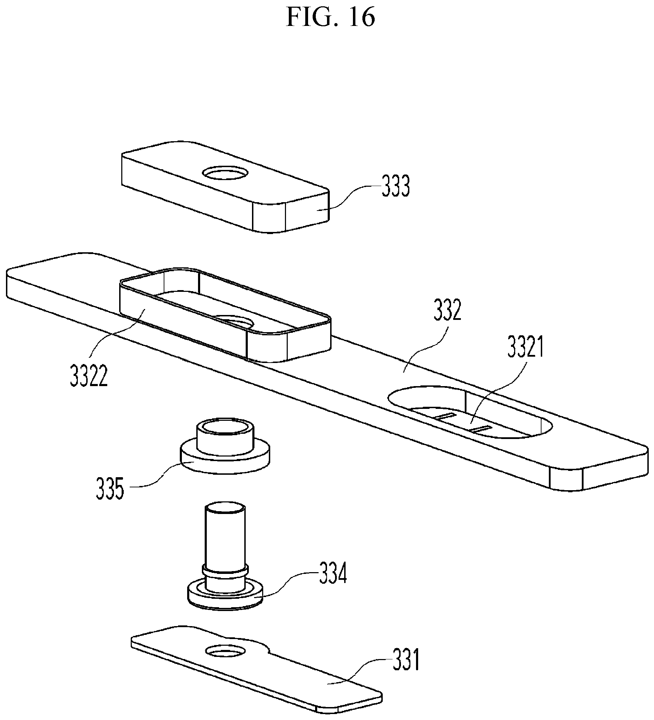

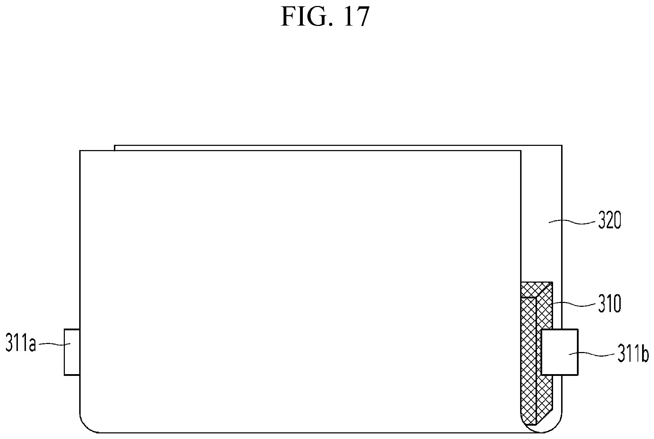

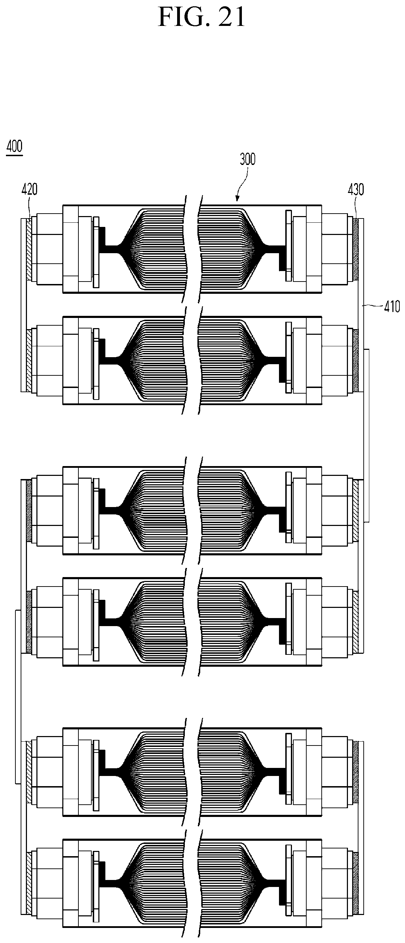

FIG. 14 is a diagram illustrating a pouch type secondary battery 300 according to embodiments. FIG. 15 is a diagram illustrating a cap assembly 330 in the pouch type secondary battery 300 according to embodiments. FIG. 16 is an exploded view of the cap assembly 330 in the pouch type secondary battery 300 according to embodiments. FIGS. 17 to 20 are diagrams illustrating a process for manufacturing the pouch type secondary battery 300 according to embodiments. FIG. 21 is a diagram illustrating a battery pack 400 including a pouch type secondary battery 300 according to embodiments.

As illustrated in FIG. 14, the pouch type secondary battery 300 according to an embodiment of the present disclosure may include an electrode assembly 310, a pouch 320, and the cap assembly 330. The electrode assembly 310 may include an electrode tab 311, and the pouch 320 may accommodate the electrode assembly 210. The pouch 320 may include a joint portion 321 formed by being open at a location corresponding to the electrode tab 311.

The cap assembly 330 may include a metal current collector 331 and a cap plate 332 to which the metal current collector is coupled. In particular, in the pouch type secondary battery 300 according to an embodiment of the present disclosure, the pouch 320 may have the joint portion 321 joined to the cap plate 332 while the electrode tab 311 is connected to the metal current collector 331.

This may be implemented through a structure in which the electrode lead 130 is omitted from the pouch type secondary battery 110 described above through FIG. 1, and the joint portion 321 of the pouch 320 is joined to the cap plate 332 of the cap assembly 330.

The pouch type secondary battery 300 according to an embodiment of the present disclosure may improve energy density by reducing a so-called dead zone extending from the electrode tab 121 to a lead 130 by omitting the electrode lead 130 from the pouch type secondary battery 110 described above through FIG. 1.

Referring to FIGS. 15 and 16, in the pouch type secondary battery 300 according to an embodiment of the present disclosure, the cap plate 332 of the cap assembly 330 may include a vent portion 3321 formed by being introduced into one side.

As described above through FIG. 1, the pouch type secondary battery 110 has no vent structure to prevent explosion or fire when the internal pressure abnormally increases in an abnormal state, and thus has a disadvantage of having concerns about stability compared to other types of secondary batteries.

Accordingly, the pouch type secondary battery 300 according to an embodiment of the present disclosure may include the vent portion 3321, thereby improving stability. Here, the vent portion 3321 is formed by being introduced into one side of the cap plate 332, and thus may be formed with a thin thickness compared to the thickness of the cap plate 332.

In an abnormal state, such as when the internal pressure of the pouch type secondary battery 300 increases due to gas generation through the vent portion 3321, the vent portion 3321 ruptures or breaks, releasing inside gas to the outside, thereby preventing an explosion or fire.

In the pouch type secondary battery 300 according to an embodiment of the present disclosure, the cap plate 332 of the cap assembly 330 may include a fixing rib 3322 formed to protrude from one surface. The cap assembly 330 may include a connection terminal 333 that is electrically connected to the outside. In this case, the connection terminal 333 may be connected through the fixing rib 3322.

In particular, compared to the cap assembly 150 described above in FIGS. 4 and 5, the cap plate 332 of the cap assembly 330 in the pouch type secondary battery 300 according to an embodiment of the present disclosure may be formed integrally with the vent portion 3321 and the fixing rib 3322 through injection molding.

This is because, unlike the prismatic type secondary batteries 100 and 200 described above with reference to FIGS. 1 to 13, there is no need for the cap assembly 330 to be joined to the prismatic cans 140 and 230 by welding or other methods. That is, the cap plate 332 is joined to the joint portion 321 of the pouch 320, and thus the cap plate 332 may be formed as an integral body of the vent portion 3321 and the fixing rib 3322 by injection molding using plastic resin.

In the pouch type secondary battery 300 according to an embodiment of the present disclosure, the cap assembly 330 may include a rivet terminal 334 that electrically connects the metal current collector 331 to the connection terminal 333. The cap assembly 330 may include a gasket 335 interposed between the metal current collector 331 and the cap plate 332, and the gasket 335 may be coupled to the rivet terminal 334.

In particular, in the pouch type secondary battery 300 according to an embodiment of the present disclosure, compared to the cap assembly 150 described above in FIGS. 4 and 5, the cap assembly 330 may have the vent portion 3321 and the fixing rib 3322 formed integrally with the cap plate 332, and an inlet of the electrolyte is not required, and thus, the seal ball 159 and the cover 1591 may be omitted, and there is no concern about current flow, and thus the insulating plate 154 may be omitted.

Therefore, the pouch type secondary battery 300 according to an embodiment of the present disclosure has an effect of reducing weight and material cost compared to the cap assembly 150 described above in FIGS. 4 and 5 through the cap assembly 330.

In the pouch type secondary battery 300 according to an embodiment of the present disclosure, the cap plate 332 may include an insulating material. This is because the cap plate 332 is interposed between the metal current collector 331 to which the electrode tab 311 is connected and the connection terminal 333 that is electrically connected to the outside.

In the pouch type secondary battery 300 according to an embodiment of the present disclosure, the pouch 320 and the cap plate 332 may include any one of a single plastic, a double plastic, a metal insert plastic, or a film insert plastic. This is to facilitate joining between the joint portion 321 of the pouch 320 and the cap plate 332.

Referring back to FIG. 14, in the pouch type secondary battery 300 according to an embodiment of the present disclosure, the electrode tab 311 may be bent while one end is fused and connected to the metal current collector 331. In this case, one end of the electrode tab 311 may be bent vertically.

This is to manufacture the pouch type secondary battery 300 according to an embodiment of the present disclosure, by fusing and connecting the metal current collector 331 of the cap assembly 330 to one end of the electrode tab 311, and then bending the electrode tab 311 such that the electrode tab 311 is bent vertically.

Referring to FIGS. 17 to 20 together, in the pouch type secondary battery 300 according to an embodiment of the present disclosure, the electrode tab 311 may include a positive electrode tab 311a located on one side of the pouch 320 and a negative electrode tab 311b located on the other side of the pouch 320. The joint portion 321 of the pouch 320 may be formed in a pair on both sides of the pouch 320.

The pouch type secondary battery 300 according to an embodiment of the present disclosure may include the positive electrode tab 311a, the negative electrode tab 311b, and a pair of cap assemblies 330a and 330b corresponding to a pair of joint portions 321.

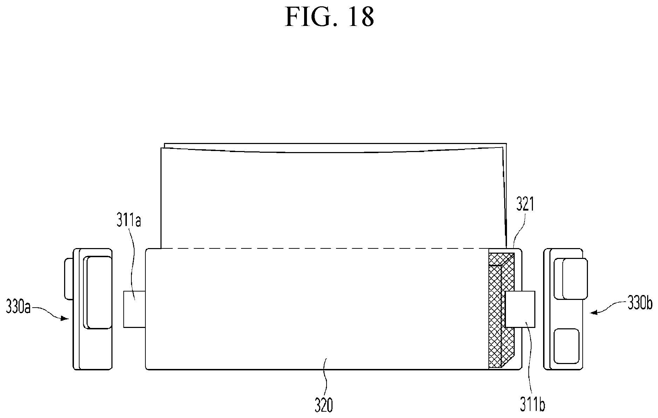

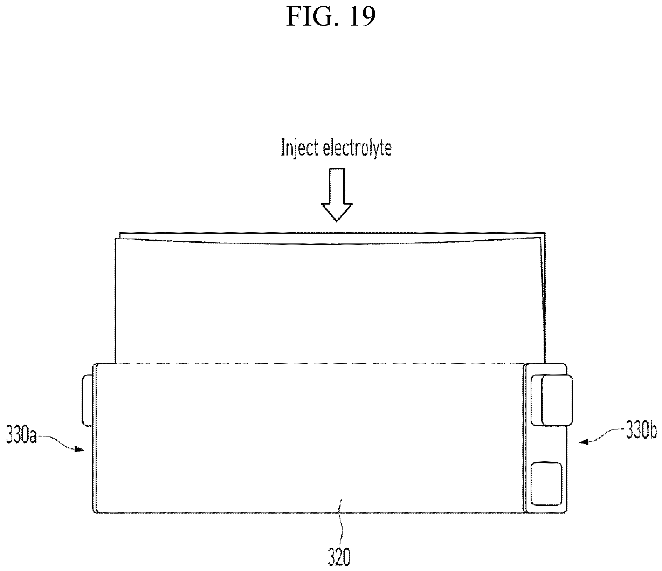

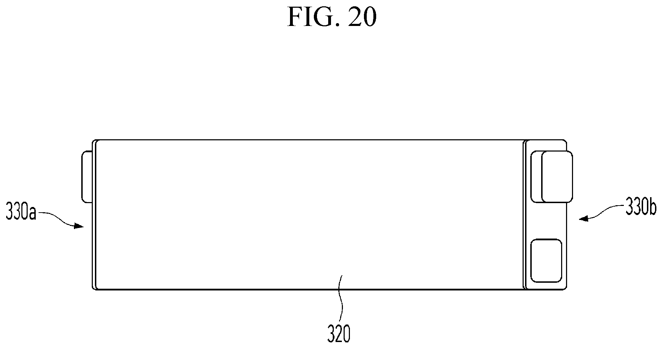

As shown in FIG. 17 and FIG. 18, the pair of joint portions 321 and the pair of cap assemblies 330a and 330b may be joined on both sides of the pouch 320 that accommodates the electrode assembly 310. Then, as shown in FIGS. 19 and 20, the pouch type secondary battery 300 according to an embodiment of the present disclosure may be produced by injecting an electrolyte into one surface of the pouch 320 and sealing and processing the pouch 320.

The pouch type secondary battery 300 according to an embodiment of the present disclosure may be self-standing, unlike the pouch type secondary battery 110 described above with reference to FIG. 1, through the form of the pair of cap assemblies 330a and 330b joined to both sides of the pouch 320 as illustrated in FIG. 20. This is beneficial to the manufacturing process and has an effect of improving process performance.

FIG. 21 is a diagram illustrating a battery pack 400 according to an embodiment of the present disclosure, which may be implemented by arranging a plurality of pouch type secondary batteries 300 described above through FIGS. 14 to 20 and electrically connecting the plurality of pouch type secondary batteries 300 through a plurality of bus bars 410.

When a battery pack is configured by electrically connecting the pouch type secondary battery 110 described above through FIG. 1, additional processing operations such as bending of the electrode lead 130 is required. An additional insulating material is required to fix the bent electrode lead 130 and connect the electrode lead 130 to the bus bar. Accordingly, when a battery pack is configured using the pouch type secondary battery 110 according to the related art, there is a disadvantage in that the required cost is higher than that of other types of secondary batteries.

On the other hand, the pouch type secondary battery 300 according to an embodiment of the present disclosure may include the cap assembly 330 connected to the electrode tab 311 and may form a positive electrode 420 and a negative electrode 430 through the connection terminal 333 of the cap assembly 330. As illustrated in FIG. 21, by connecting the plurality of bus bars 410 through the connection terminal 333, electrical connection is possible between the plurality of pouch type secondary batteries 300, thereby implementing the battery pack 400 according to the present disclosure.

Therefore, the battery pack 400 according to an embodiment of the present disclosure may easily form electrical connection between the plurality of pouch type secondary batteries 300 without additional processing operations or additional members compared to the related art, thereby improving productivity and reducing costs.

In summary, the pouch type secondary battery 300 and the battery pack 400 including the same according to the present disclosure may have improved stability through a structure in which the electrode tab 311 is connected to the cap assembly 330 and the joint portion 321 of the pouch 320 is joined to the cap assembly 330. An explosion or fire may be prevented when the internal pressure abnormally increases by forming the vent portion 3321 in the cap assembly 330. Self-standing may be obtained through a shape of the cap assembly 330 to improve process performance. Electrical connection between a plurality of pouch type secondary batteries 300 is simple through the cap assembly 330, and thus the battery pack 400 may be easily and inexpensively configured.

The above detailed description is to be construed in all aspects as illustrative and not restrictive. The scope of the present disclosure should be determined by reasonable interpretation of the appended claims and all changes coming within the equivalency range of the present disclosure are intended to be embraced in the scope of the present disclosure.

A prismatic type secondary battery and a manufacturing method thereof according to the present disclosure may improve the efficiency of an electrolyte injection process through a sealing structure in which a pouch accommodating an electrode assembly is inserted into a prismatic can and a joint portion of the pouch is joined to a cap assembly.

Stability may be ensured by double-sealing an electrode assembly with a pouch and a prismatic can with rigidity and interposing a fire extinguishing fluid between the pouch and the prismatic can.

A production line of a pouch type secondary battery according to the related art may be used, and thus the prismatic type secondary battery may be manufactured while reducing investment costs.

The effects to be achieved by the present disclosure are not limited to the effects described above and other effects that are not stated herein will be clearly understood by those skilled in the art from the following specifications.

## Claims

1. A prismatic type secondary battery (200) comprising:
an electrode assembly (210) including an electrode tab (211);
a pouch (220) that accommodates the electrode assembly (210) and includes a joint portion (221) formed open at a location corresponding to the electrode tab (211);
a prismatic can (230) having one side open to accommodate the pouch (220); and
a cap assembly (240) including a metal current collector (241) and inserted into the open side of the prismatic can (230),
wherein the pouch (220) includes the joint portion (221) joined to the cap assembly (240) while the electrode tab (211) is connected to the metal current collector (241).

2. The prismatic type secondary battery (200) of claim 1, further comprising a fire extinguishing fluid (250) interposed between the pouch (220) and the prismatic can (230).

3. The prismatic type secondary battery (200) of claim 1 or 2, wherein the electrode tab (211) is bent with one end fused and connected to the metal current collector (241).

4. The prismatic type secondary battery (200) of claim 3, wherein the end of the electrode tab (211) is bent vertically.

5. The prismatic type secondary battery (200) of any one of claims 1 to 4, wherein the prismatic can (230) includes a metal material, and
the cap assembly (240) includes a cap plate (242) coupled to an inner surface of the open side of the prismatic can (230).

6. The prismatic type secondary battery (200) of claim 5, wherein the cap assembly (240) includes a connection terminal (243) coupled to the cap plate (242) and electrically connected to the metal current collector (241).

7. The prismatic type secondary battery (200) of claim 5 or 6, wherein the cap assembly (240) includes an insulating plate (244) coupled between the metal current collector (241) and the cap plate (242).

8. The prismatic type secondary battery (200) of claim 7, wherein the joint portion (221) is fused and joined to an outer surface of the insulating plate (244).

9. The prismatic type secondary battery (200) of any one of claims 5 to 8, wherein the cap plate (242) includes a bent portion (153) formed on one surface.

10. The prismatic type secondary battery (200) of claim 9, wherein the bent portion (153) includes:
a vent hole (1531) formed in the cap plate (242); and
a bent (1532) located in the bent hole (1531).

11. The prismatic type secondary battery (200) of any one of claims 5 to 10, wherein the cap plate (242) includes a metal material and is joined by welding to an inner surface of the open side of the prismatic can (230).

12. A method of manufacturing a prismatic type secondary battery (200), the method comprising:
connecting an electrode tab (211) of an electrode assembly (210) accommodated in a pouch (220) to a metal current collector (241) of a cap assembly (240);
bending the electrode tab (211) while connected to the metal current collector (241);
joining an opened joint portion (221) of the pouch (220) to the cap assembly (240);
injecting an electrolyte into the pouch (220) and sealing and processing the pouch (220); and
inserting the pouch (220) and the cap assembly (240) into a prismatic can (230) with one side open.

13. The method of claim 12, further comprising injecting a fire extinguishing fluid (250) between the pouch (220) and the prismatic can (230).

14. The method of claim 12 or 13, wherein the electrode tab (211) is bent with one end fused and connected to the metal current collector (241).

15. The method of claim 14, wherein the end of the electrode tab (211) is bent vertically.
